# EUROPÄISCHE PATENTANMELDUNG

(11) **EP 1 253 530 A2**
(43) Veröffentlichungstag der Anmeldung: **30.10.2002**
(21) Anmeldenummer: 02008760.7
(22) Anmeldetag: 18.04.2002
(51) Int. Cl.: G06F 17/30

(54) **System und Verfahren zur automatischen Aktualisierung von Produktdaten in einem elektronischen Katalog**

(30) Priorität: 26.04.2001 DE 10120571
(71) Anmelder: SIEMENS AKTIENGESELLSCHAFT, 80333 München (DE)
(72) Erfinder: Biehler, Hans-Martin, Dr., 92245 Kümmersbruck (DE); Lindemair, Benno, 92507 Nabburg (DE)

(57) **Zusammenfassung**

Die Erfindung betrifft ein System und ein Verfahren zur automatischen Aktualisierung von Produktdaten in einem elektronischen Katalog. Für eine aufwandsarme Bereitstellung von aktuellen und gleichzeitig korrekten Produktdaten in einem elektronischen Katalog wird vorgeschlagen, dass die Schritte Datenübernahme, Datenprüfung, Datenkorrektur, protokollierte Freigabe und Ladeaktion in einem einzigen automatisierten Ablauf erfolgen, wobei unter Nutzung von Protokolldaten, insbesondere den zuletzt geladenen Produktdaten, als Archiv- und Vergleichsdaten nur eine Freigabeentscheidung vom Bediener vorgesehen ist.

## Beschreibung

Die Erfindung betrifft ein System sowie ein Verfahren zur automatischen Aktualisierung von Produktdaten in einem elektronischen Katalog.

Ein derartiges System kommt im Zusammenhang mit sogenannten ERP-Systemen zum Einsatz (Enterprises Resource Planning). Um dabei eine elektronischen Beschaffungsprozess über Internet/Intranet möglichst fehlerfrei ausführen zu können, ist es wichtig, dass die erforderlichen Produktdaten im elektronischen Katalog auf Vollständigkeit geprüft werden und die Konsistenz gegenüber Stammdaten im ERP - System gewährleistet ist. Werden Daten ohne vorherige syntaktische Prüfung in den elektronischen Katalog eingespielt, kann es zu Fehlern bei der Datenübergabe zwischen BBP und ERP - System kommen. Neben einer syntaktischen Prüfung ist auch eine semantische Prüfung erforderlich. Aus diesem Grund ist es erforderlich, vor einer Dateneinspielung in den elektronischen Katalog, die rohen Katalogdaten einer so genannten Plausibilitätsprüfung zu unterziehen.

Der Erfindung liegt die Aufgabe zugrunde, ein System und ein Verfahren zur automatischen Aktualisierung von Produktdaten in einem elektronischen Katalog anzugeben, das auf aufwandsarme Weise die Bereitstellung von aktuellen und gleichzeitig korrekten Produktdaten in einem elektronischen Katalog ermöglicht.

Diese Aufgabe wird durch ein Verfahren bzw. durch ein System mit den in unabhängigen Ansprüchen angegebenen Merkmale gelöst.

Dabei wird nach erfolgter syntaktischer und semantischer Überprüfung nur einmal explizit eine Aktualisierungsentscheidung abgefragt, wobei die jeweiligen entscheidungsrelevanten Informationen in kompakter Weise angeboten werden und somit eine protokollierte Freigabe von Katalogteilen mittels eines sogenannten eBrokers.

Im folgenden wird die Erfindung anhand des in der Figur dargestellten Ausführungsbeispiels näher beschrieben und erläutert.

Es zeigt:

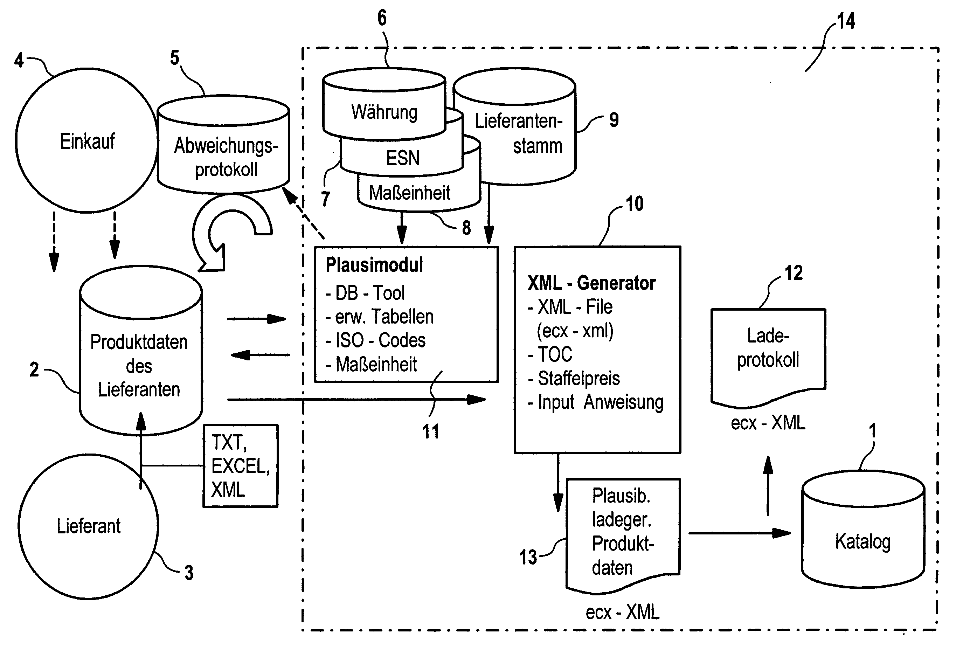

- FIG 1: ein Blockschaltbild mit Ablaufschema für ein System zur automatischen Aktualisierung von Produktdaten in einem elektronischen Katalog.

FIG 1 zeigt ein Blockschaltbild mit Ablaufschema ein System 14 zur automatischen Aktualisierung von Produktdaten in einem elektronischen Katalog 1, das im folgenden auch als eBroker 14 bezeichnet wird. Der eBroker 14 umfasst neben dem Katalog 1 ein Plausimodul 11, einen XML-Generator 10, ein ein Währungsmodul 6, ein ESN-Modul 7, ein Maßeinheitenmodul 8 sowie in Lieferantenstammmodul 9.

Die Produktdaten 2, welche in den elektronischen Katalog 1 eingespielt werden, werden in der Regel von Lieferanten 3 geliefert. Diese Produktdaten 2 umfassen fest vordefinierte Attribute, wobei einige Pflichtfelder, alle anderen Kannfelder sind. Als Pflichtfelder sind beispielsweise Materialnummer, Materialkurztext, Mengeneinheit und Mengenpreis zu verstehen. Kannfelder sind zum Beispiel Staffelpreis, Staffelmenge und technische Datenblätter oder Bilder. Der Lieferant 3 übermittelt die elektronischen Daten via E-mail, FTP - Zugriff oder CD- Rom an den Kunden. In Abhängigkeit von der Datengröße muss immer entschieden werden, welche Übertragungsweise aus technischer und betriebswirtschaftlicher Sicht die sinnvollste ist. Werden beispielsweise nur Daten und keine elektronischen Datenblätter oder Bilder mitgeliefert, so ist eine Datenübertragung per Mailverkehr durchaus zu empfehlen. Die Datengröße ist hierbei als gering anzusehen. Somit werden keine Mailserver blockiert. werden zum gleichen elektronischen Katalog jedoch Datenblätter (Dokumente vom Typ PDF, DOC, HTML, usw.) und Bilder mitgeliefert, so kann die Größe der Datenmenge die maximal erlaubte Mailgröße überschreiten. Aus diesem Grund empfiehlt sich hier eine Übertragung via CD-Pom oder FTP (File - Transfer - Protokoll). Aus Sicherheitsgründen können die Daten auch via HTTPS übermittelt werden. Diese Übertragungsmöglichkeit ist vergleichbar mit FTP, jedoch findet hier ein verschlüsselter Datenaustausch statt.

Als Datenaustauschformat ist der BMECAT empfehlenswert. Dieses Format ist eine Darstellung der Daten in XML. Jedoch werden die eigentlichen Rohdaten um ca. 40 - 60 Prozent vergrößert, da XML eine Seiten- und Datenbeschreibende Sprache ist. Weiterhin ist zu beachten, dass nicht jeder Lieferant seine Daten in XML aus technischen und betriebswirtschaftlichen Gründen darstellen kann. Aus diesen beiden genannten Gründen können die Daten auch als Excel - Tabelle, Access - Datenbank oder als Ascii - Darstellung übertragen werden. Diese Datendarstellung kann von ca. 99 Prozent der Lieferanten erstellt werden, da es sich hierbei um ein täglich benötigtes Format handelt.

In den elektronischen Katalog 1 werden die Katalogdaten von verschiedenen Lieferanten 3 eingespielt. Um die Artikel, die einer Produktgruppe zugeordnet werden können, zusammenzufassen wird bei dem in FIG 1 dargestellten Ausführungsbeispiel eine weltweit anerkannte Klassifizierung verwendet. Nur auf diese Weise können gleiche Artikel von unterschiedlichen Lieferanten zu einer Produktgruppe gruppiert werden. Würde die Klassifizierung der einzelnen Lieferanten verwendet, würde sich der gleiche Artikel, der von verschiedenen Lieferanten bezogen werden kann, in verschiedenen Produktgruppen befinden. Der Bedarfsträger könnte so niemals den optimalsten Vergleich der beiden Artikel bekommen. Aus diesem Grund ist es sinnvoll, eine Klassifizierung, die jedem Lieferanten bekannt ist, zu verwenden. Jeder Lieferant 3 muss seine einzelnen Artikel dieser Klassifizierung zuordnen. Derzeit gibt es drei bekannte, unterschiedlich aufgebaute Klassifizierungsarten (RUS, eclass, LJNISPSC). Grundlage für die Zuordnung der Warengruppen ist die Klassifizierung.

Bevor eine Plausibilitätsprüfung 11 der Rohdaten durch den eBroker 14 stattfinden kann, müssen einige verschiedene Stammdaten in den eBroker eingepflegt werden.

Um den Lieferantennamen bzw. die Lieferanten - ID überprüfen zu können, muss diese im Lieferantenstammsatz des eBrokers 14 hinterlegt werden. Zusätzlich wird hier noch der Link auf eventuelle Bilder oder technische Datenblätter hinterlegt. Hierbei wird nur der Share und nicht der Dateiname aufgenommen.

Um eine Zuordnung der Warengruppe zu jedem Datensatz zu ermöglichen, müssen alle verwendeten Warengruppen aufgenommen werden. Hierbei ist zu beachten, dass jede aufgenommene Warengruppe dem ERP - System bekannt ist. Eine Zuordnung der Warengruppe im BBP - System muss ebenfalls erfolgen.

Da jeder Datensatz einer bestimmten Klassifizierung zugeordnet ist, muss diese im eBroker zusätzlich aufgenommen werden. Nur so kann überprüft werden, ob eine einem Artikel zugewiesene Klassifizierung dem Katalogtool bekannt ist. Die Klassifizierung ist ein 8-stelliger Zifferncode. Die letzte Ebene (Produktkategorie) wird dem Artikel vom Lieferanten zugeteilt. Die dazugehörigen Produktgruppen werden automatisch durch den eBroker in das Katalogtool aufgenommen.

Eine Zuordnung der Warengruppe zu jedem Datensatz findet durch die Klassifizierung statt. Aus diesem Grund muss jeder Produktkategorie die dazugehörige Warengruppe zugewiesen werden. Aus Sicherheitsgründen wird nicht nur jeder Produktkategorie, sondern auch jeder Produktgruppe eine Warengruppe zugewiesen. Grundsätzlich können nur solche Warengruppen verwendet werden, welche auch als Warengruppen in den eBroker aufgenommen wurden.

Um unterschiedliche Währungen 6 im elektronischen Katalog 1 zu vermeiden, müssen alle zugelassenen Währungen 6 im eBroker erfasst werden. Wird eine Währung von einem Lieferanten verwendet, die dem eBroker nicht bekannt ist, wird der Datensatz als fehlerhaft gekennzeichnet. Eine Umrechnung der einzelnen Währungskurse findet nicht statt.

Um eine harmonisierte Darstellung der Mengeneinheiten im elektronischen Katalog zu gewährleisten, werden die einzelnen Mengeneinheiten pro Artikel vom Lieferanten als ISO - Code zugewiesen. Der ISO - Code ist weltweit anerkannt. Es ist sicherzustellen, das der ISO - Code dem FRP - System bekannt ist. Ist einem Artikel ein ISO - Code zugewiesen, welcher dem eBroker nicht bekannt ist, so wird der gesamte Datensatz als fehlerhaft ausgewiesen. Um dem Bedarfsträger die bekannten Mengeneinheiten darstellen zu können, wird dem jeweiligen ISO - Code die dazugehörige deutsche Bezeichnung im eBroker hinzugefügt.

Nach der Datenübertragung werden die Daten in Abhängigkeit des Datenformats konvertiert. Eine Konvertierung muss nur dann stattfinden, wenn die Daten nicht im Ascii - Format übertragen werden. Nach der Konvertierung werden die Daten in den eBroker eingelesen und nach den einzelnen Attributen aufgesplittet. Nach erfolgreicher Einlesung der Daten findet anschließend sofort die semantische und syntaktische Datenprüfung statt. Da einige Attribute des Artikels nach der Auswahl vom elektronischen Katalog in des ERP -System übernommen werden, müssen die Daten bestimmten Anforderungen des ERP - Systems entsprechen.

Die syntaktische Prüfung dient dazu, die Daten auf diese Anforderungen zu überprüfen und im Fehlerfall ein so genanntes Fehlerprotokoll zu erstellen. Eine Anforderung des ERP - System ist beispielsweise, dass der Materialkurztext maximal die Länge von 40 Zeichen entspricht. Ist der Kurztext länger als 40 Zeichen, so würde eine Obertragung zwischen BBP und ERP nicht fehlerfrei stattfinden. Wird ein Datensatz, dessen Materialkurztext länger als 40 Zeichen ist vom eBroker gefunden, so wird dieser als fehlerhaft gekennzeichnet und es findet ein Eintrag im Fehlerprotokoll statt.

Zusätzlich wird getestet, ob für jeden Datensatz eine so genannte Importanweisung vorhanden ist. Für jeden einzelnen Datensatz muss ersichtlich sein, ob dieser in den Katalog neu aufgenommen, upgedatet oder gelöscht werden soll. Kann eine Importanweisung nicht gefunden werden, so findet wiederum ein F-Eintrag im Fehlerprotokoll statt. Der Datensatz wird als fehlerhaft markiert.

Zusätzlich muss jeder Datensatz eine Klassifizierung besitzen. Ist eine Klassifizierung vorhanden, so wird geprüft, ob diese dem Katalogtool auch bekannt ist bzw. ob die Klassifizierung der gültigen Konvention entspricht. Im Fehlerfall findet ein Eintrag im Protokoll statt.

Wird ein Artikel von BBP in das ERP - System übernommen, wird zusätzlich die Lieferanten-10 übergeben. Vor der Aufnahme der Lieferanten-ID in den elektronischen Katalog wird geprüft, ob diese dem ERP - System bekannt ist. Die Lieferanten-ID muss immer ein 10-stelliger Zifferncode sein. Ist die Lieferanten-ID nicht vorhanden oder diese dem ERP - System nicht bekannt, so erfolgt ein Eintrag in das Fehlerprotokoll.

Es ist deutlich zu erkennen, dass im Fehlerfall der Datensatz immer markiert wird und ein Eintrag im Fehlerprotokoll stattfindet. So kann vermieden werden, dass ein fehlerhafter Datensatz in den elektronischen Katalog geladen wird. Die syntaktische Prüfung testet noch weitere Attribute auf deren Richtigkeit. Eine Beschreibung aller Attribute wäre hier allerdings nicht sinnvoll, denn eine Prüfung ist immer vom jeweiligen ERP - System abhängig.

Eine semantische Prüfung der einzelnen Datensätze findet immer dann statt, wenn ein Update eines Datensatzes vorgesehen ist. Zusätzlich wird in Abhängigkeit von bestimmten Einträgen verschiedener Attributen eine semantische Prüfung ausgeführt. Sind beispielsweise Staffelpreise zu einem Artikel vorhanden, so muss sichergestellt sein, dass jeder Staffelpreis eine Staffelmenge besitzt. Ist ein Staffelpreis und eine Staffelmenge vorhanden, so wird durch die semantische Prüfung getestet, ob diese beiden Attribute an erster Stelle stehen. Eine Staffelmenge "2" und einen Staffelpreis "2" kann es nur geben, wenn eine Staffelmenge "1" und ein Staffelpreis "1" vorhanden ist. Weiterhin wird sichergestellt, dass bei vorhandenen Staffelpreisen jeder einzelne Staffelpreis mit zunehmender Staffelmenge abnimmt. Wird diese Logik nicht eingehalten, so wird der Datensatz als fehlerhaft markiert und es findet ein Eintrag in das Fehlerprotokoll statt.

Werden technische Datenblätter und Bilder mitgeliefert, so wird geprüft, ob diese auch wirklich vorhanden sind. Wird ein Datensatz mit Hinweis auf ein Bild, das nicht vorhanden ist, geladen, so wäre ein fehlerhafter Link im elektronischen Katalog vorhanden. Aus diesem Grund findet auch hier bei einem Fehler ein Eintrag in das Fehlerprotokoll statt.

Bei einem Datenupdate kann der zuständige Einkauf 4 dem eBroker 14 mitteilen, um wie viel Prozent der neue Preis den alten Preis überschreiten darf. Findet ein Datenupdate statt, deren neuer Preis den alten Preis um die festgelegte Wertgrenze überschreitet, so wird der Datensatz als fehlerhaft markiert und im Fehlerprotokoll festgehalten.

Ist ein Datensatz nach der syntaktischen und semantischen Datenprüfung fehlerfrei, so werden diesem einige zusätzlichen Informationen hinzugemappt. Ist beispielsweise ein Bild oder ein technisches Datenblatt zu einem Artikel vorhanden, so setzt sich der Link, der auf das Bild verweist, aus dem Share und dem Dateinamen zusammen. Der Share wird aus dem Lieferantenstammsatz des eBrokers gezogen. Es wird also der Share und der Dateiname konkatiniert. Ist kein Bild vorhanden, so wird ein Standardbild (Logo) dem Datensatz hinzugefügt. Ist kein technisches Datenblatt vorhanden, so erfolgt in dem Attribut ein Eintrag, der dem Bedarfsträger mitteilt, dass kein technisches Datenblatt vorhanden ist.

Nach dem gleichen Prinzip wird die Warengruppe jedem Artikel zugemappt. Grundlage dazu ist die Klassifizierung. Die dazugehörige Warengruppe wird aus den Stammdaten des eBrokers ermittelt und dem Datensatz hinzugefügt.

Bei den Mengeneinheiten wird neben dem ISO - Code die deutsche Bezeichnung zu jedem Datensatz hinzugefügt. Das bedeutet, das dem ERP - System zwar die ISO - Bezeichnung übertragen wird, der Bedarfsträger jedoch die dazugehörige deutsche Bezeichnung zur Ansicht bekommt.

Ist ein Staffelpreis vorhanden, so wird zusätzlich ein Feld gefüllt, damit der Bedarfsträger sofort erkennen kann, dass zu diesem Artikel ein Staffelpreis vorhanden ist. Da Staffelpreise grundsätzlich nur in der so genannten Detailansicht dem Bedarfsträger angezeigt werden, ist es sinnvoll schon in der Tableview dem Bedarfsträger mitzuteilen, dass mindestens ein Staffelpreis vorhanden ist.

Jedem Attribut, das kein Pflichtfeld ist, wird bei keinem Inhalt ein Standardtext zugewiesen. Das bedeutet, dass jedes Attribut in der Katalogsicht immer einen Inhalt hat. So kann vermieden werden, dass Attribute mit keinem Inhalt angezeigt werden. Der Bedarfsträger erkennt sofort, dass es sich hierbei nicht um einen Fehler handelt. Kannfelder, welche vom Typ String sind, wird ein Charakter - Wert zugewiesen. Den Anderen ein Integer - Typ. Sind beispielsweise für einen Datensatz keine Staffelpreise vorhanden, so werden dem Bedarfsträger die Staffelpreise mit dem Inhalt 0 angezeigt. Das bedeutet, dass der Bedarfsträger immer die gleiche Ansicht auf das Katalogtool hat und sich somit besser zurecht finden kann.

Nachdem die Daten der Prüfroutine unterlaufen sind, wird das Fehlerprotokoll überprüft. Wird ein Eintrag gefunden, so wird die Weiterbearbeitung so lange unterbrochen, bis der Fehler bereinigt wurde. Das Fehlerprotokoll kann ausgedruckt werden und dem Lieferanten bei groben Datenfehlern zugesandt werden. Nach der Fehlerbereinigung wird nur der fehlerhafte Datensatz noch einmal geprüft. Dieser Mechanismus wird so lange wiederholt, bis keine Fehler mehr gefunden werden können.

Wurden alle Fehler bereinigt, so wird ein so genanntes Ladefile erzeugt. Dieses hat ein bestimmtes Format, welches das Katalogtool zum Laden der Katalogdaten benötigt. Wurde eine neue Klassifizierung aufgenommen, so wird zusätzlich ein weiteres Ladefile erzeugt, welches die Klassifizierung im Katalogtool beschreibt und neu aufbaut. Nach Erzeugung des Ladefiles, wird der zuständige Mitarbeiter aufgefordert, den Ladeprozess durch einen Buttonklick anzustoßen. Dies bedeutet zugleich die Freigabe der Katalogdaten.

Wird der Ladeprozess durch den Mitarbeiter angestoßen, so wird durch einen Batchprozess der Ladeprozess ausgeführt. Nach dem Ladeprozess werden alle temporären Dateien wieder gelöscht. Der Ladeprozess wird durch das Katalogtool in einem Ladeprotokoll 12 mitprotokolliert. Sollten Fehler während des Ladens der Katalogdaten auftreten, so sind diese im Ladeprotokoll 12 nachzuvollziehen. Nun ist der Lieferant in den elektronischen Katalog aufgenommen und für den Bedarfsträger freigeschaltet. Dieser kann nun die neu aufgenommenen Artikel bestellen.

## Patentansprüche

1. System (14) zur automatischen Aktualisierung von Produktdaten (2) in einem elektronischen Katalog (1) mit:
• Mitteln zur Übernahme der Produktdaten (2) an das System (1),
• Mitteln (11) zur Datenprüfung und/oder Datenkorrektur,
• Mitteln (12) zur protokollierten Freigabe der Katalogdaten für den Katalog (1),
• Mitten zur Steuerung der Schritte Datenübernahme, Datenprüfung, Datenkorrektur, protokollierte Freigabe und Ladeaktion in einem einzigen automatisierten Ablauf unter Nutzung von Protokolldaten, insbesondere den zuletzt geladenen Produktdaten, als Archiv- und Vergleichsdaten und
• Freigabemitteln zur Freigabe der Katalogdaten nach erfolgter Freigabeentscheidung durch einen Bediener.

2. System dach Anspruch 1,
**dadurch gekennzeichnet,**
**dass** das System Mittel zur Markierung eines fehlerhaften Datensatzes und/oder zur Erstellung eines Eintrags in ein Fehlerprotokoll aufweist.

3. Verfahren zur automatischen Aktualisierung von Produktdaten in einem elektronischen Katalog, bei dem in einem einzigen automatisierten Ablauf die Schritte Datenübernahme, Datenprüfung, Datenkorrektur, protokollierte Freigabe und Ladeaktion erfolgen und bei dem unter Nutzung von Protokolldaten, insbesondere den zuletzt geladenen Produktdaten, als Archivund Vergleichsdaten nur eine Freigabeentscheidung vom Bediener vorgesehen ist.

4. Verfahren dach Anspruch 3,
**dadurch gekennzeichnet,**
**dass** ein fehlerhafter Datensatz markiert und/oder ein Eintrag in ein Fehlerprotokoll durchgeführt wird.
